# EUROPEAN PATENT SPECIFICATION

(11) **EP 3 004 800 B1**
(45) Date of publication and mention of the grant of the patent: **08.08.2018**
(21) Application number: 13886417.8
(22) Date of filing: 25.06.2013
(51) Int. Cl.: G01C 21/00, G01S 19/11, G05D 1/02, G01S 5/02, G01S 19/48, G05D 1/00

(54) **METHOD AND APPARATUS FOR OFFBOARD NAVIGATION OF A ROBOTIC DEVICE**
VERFAHREN UND VORRICHTUNG FÜR OFFBOARD-NAVIGATION EINER ROBOTISCHEN VORRICHTUNG
PROCÉDÉ DE NAVIGATION NON EMBARQUÉE D'UN DISPOSITIF ROBOTIQUE ET APPAREIL ASSOCIÉ

(30) Priority: 03.06.2013 SG 201304289
(43) Date of publication of application: 13.04.2016
(73) Proprietor: CtrlWorks Pte. Ltd., Singapore 139955 (SG)
(72) Inventor: SIM, Kai, Singapore 637723 (SG); CHENG, Calvin, Singapore 637723 (SG)
(74) Representative: White, Andrew John
(86) International application number: PCT/SG2013/000262
(87) International publication number: WO 2014/196925

(56) References cited:
- WO-A2-2009/148610
- US-A- 5 612 883
- US-A1- 2010 070 079
- US-A1- 2012 185 099
- Sven Behnke ET AL: "Predicting Away Robot Control Latency" In: "Network and Parallel Computing", 31 December 2004 (2004-12-31), Springer International Publishing, Cham 032548, XP055282706, ISSN: 0302-9743 ISBN: 978-3-642-36762-5 vol. 3020, pages 712-719, DOI: 10.1007/978-3-540-25940-4_70, * the whole document *
- GLOYE A. ET AL: 'PREDICTING AWAY ROBOT CONTROL LATENCY' TECHNICAL REPORT B08-03 24 August 2007, XP055282706

## Description

### Field of the Invention

The present invention relates to offboard navigation of a robotic device, and particularly, relates to adaptive offboard navigation that responds to changes in network conditions.

### Background

Autonomous navigation is a key enabler for the widespread use of robotic devices in the consumer market and industry. These robotic devices move around a place to perform tasks relying on sensors and navigation systems without any human direction.

However, to achieve such navigation with a satisfactory level of accuracy is costly as it is computationally intensive and demanding in terms of processing load and power required to provide navigation commands in real time. Traditionally, navigation systems are provided on the robotic devices so that the robotics devices are capable of working independently by performing all navigation processing onboard. Thus, there is a trend to use more powerful computers and bigger batteries onboard. However, this approach results in higher costs. Besides the increase in cost, another disadvantage of this approach is the increase in the size of the robotic devices which may make these robotic devices unsuitable for applications where the size is one of the main concerns.

While existing Autonomous Guided Vehicles (AGVs) used in many industries are simpler, extensive, expensive and inflexible modifications to the building infrastructure are required for these vehicles to work. For example, one type of the AGVs has to follow markers or wires installed in the floor when navigating a place.

Another approach is to couple the robotic devices to a remote server via a communication link and harness the processing power of the server. The remote server may be, for example, a cloud-computing platform, and the communication link may be a wireless network. Thus, the navigation processing may be performed offboard entirely at the remote server, or be split into a mixture of onboard and offboard processing. As the majority of the computation can be allocated to the remote server or distributed among a group of remote servers equipped with powerful processors, minimum processing can be performed at the robotic devices adopting offboard navigation. Examples of the minimum processing at the robotic devices include transmitting sensor data obtained by the sensors of the robotic devices to the server and receiving navigation command and/or positional information from the remote sensor.

This approach addresses the cost and size issues, but it is subject to actual network conditions as there is always a delay in transmitting and receiving signals between the robotic devices and the remote server which affects the positional accuracy of the robotic devices.

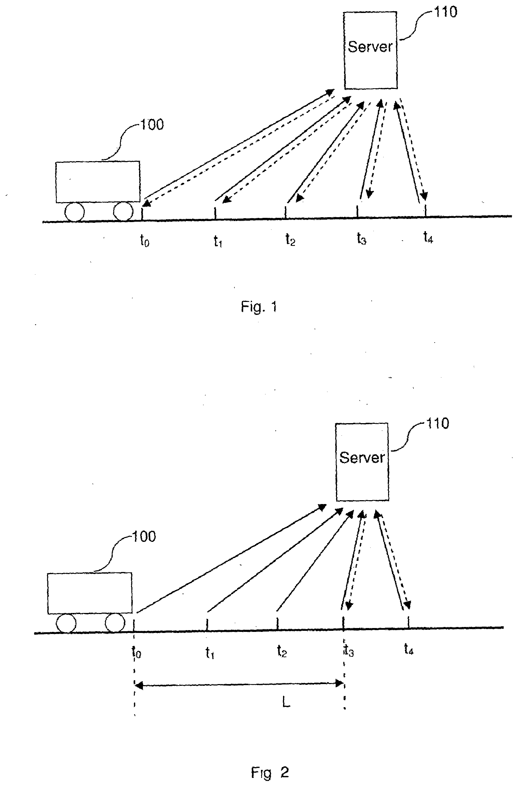

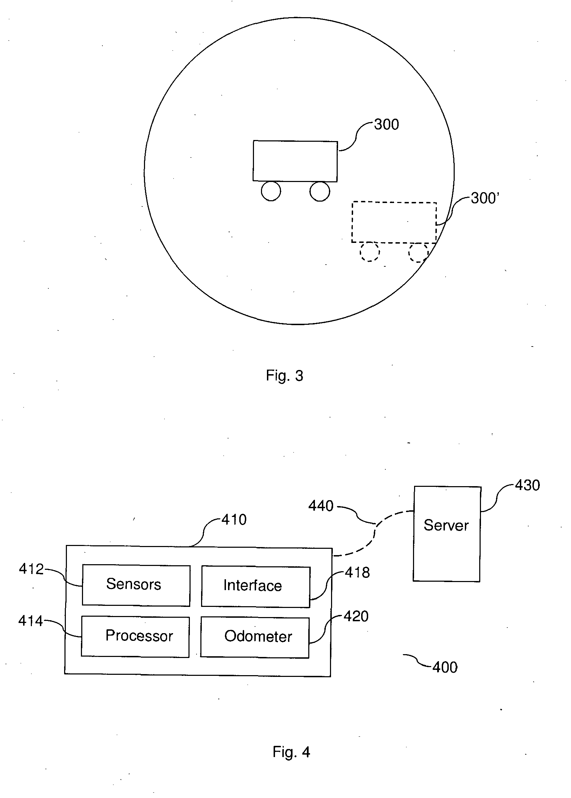

Fig. 1 shows an ideal situation of the offboard navigation in which no latency of the network L exists (L=0). A robotic device 100 sends the sensor data obtained by its sensors to a server 110 via a wireless network at successive timings t₀, t₁, t₂... The sensor data is processed by the server 110 which calculates the actual position of the robotic device 100 and then sends this positional information or navigation command such as the distance and the direction to move, to the robotic device 100. Thus, the robotic device 100 is commanded to move based on its actual position and the destination or planned route. In the ideal situation where there is no latency of the network (similar to onboard navigation) the robotic device 100 receives the positional information or navigation command nearly at the same timings t₀, t₁, t₂..., assuming that the processing time of the server 110 is insignificant and negligible. Therefore, the navigation command is always given based on the actual current position of the robotic device 100 and thus the positional accuracy of the robotic device 100 is comparable to the onboard navigation. Fig. 3 illustrates the positional accuracy of the robotic device 100 as the maximum difference or error between the actual position 300 and an estimated position 300' of the robotic device 100. For example, if the robotic device 100 makes use of its odometry information to estimate its own position 300' (as shown in Fig. 3) while moving according to the navigation command, the positional accuracy of the robotic device 100 is the odometry error accumulated in a sampling period T, which is the period between two consecutive timings. The odometry error is defined as the difference between the commanded distance to be moved and the actual distance moved by the robotic device 100.

However, in reality, the positional accuracy of the robotic device is affected by the latency of the network (L>0). As shown in Fig. 2, there is always a difference between the time (for example, t=t₀) at which a packet of sensor data is sent from the robotic device 100 to the server 110 and the time (for example, t=t₃) at which a packet of the processed data corresponding to the sensor data sent at t=t₀ is received by the robotic device 100 from the server 100 and this difference t₃-t₀ is defined as the latency of the network.

Therefore, during the period from t₃ to t₄, the robotic device 100 moves according to the navigation command received at t₃ which corresponds to the sensor data and the actual position of the robotic device 100 at t=t₀, but not the navigation command corresponding to its current position at t₃. Therefore, the positional accuracy of the robotic device 100 is affected due to the latency of the network.

The latency of the network between the robotic devices and the server is mainly influenced by the amount of sensor data and network bandwidth both of which are susceptible to environmental changes. While the positional error of the robotic devices due to the latency of the network may not be significant in good network conditions where L is low, the accumulation of this error may become intolerable in slow network conditions where L is high, especially if the robotic devices move at a high speed.

Therefore, there is a need to have an offboard navigation method and apparatus which give a certainty in the positional accuracy of the navigation by considering the delay caused by the communication network between the robotic devices and the remote sever.

### Summary

In accordance with one aspect of the present invention, there is provided a method for offboard navigation of a robotic device according to Claim 1, the method comprising: defining a threshold value of a positional accuracy of the robotic device, calculating latency of a network through which the robotic device and a server communicate, the latency of the network being a time difference between sending sensor data from the robotic device to the server and receiving processed data corresponding to the sent sensor data by the robotic device from the server, and determining a maximum allowable speed of the robotic device based on the threshold value of the positional accuracy of the robotic device and the latency of the network.

Determining the maximum allowable speed of the robotic device may comprise setting a sampling period in accordance to the latency of the network, the sampling period being a difference between two consecutive sendings of the sensor data from the robotic device to the server and determining a commanded displacement to be moved by the robotic device in the sampling period.

Determining the commanded displacement to be moved by the robotic device in the sampling period may comprise determining a desired displacement to be moved by the robotic device in the sampling period according to characteristics of odometry error of the robotic device and obtaining a positional error to be offset in the sampling period.

The characteristics of the odometry error of the robotic device may be represented by a profile curve of the odometry error of the robotic device calibrated in advance.

The threshold value of the positional accuracy of the robotic device may be determined based on the environment in which the robotic device operates.

The speed of the robotic device may be determined to be inversely proportional to the latency of the network.

The method may further comprise driving the robotic device to move at a speed equal to or less than the determined speed.

In accordance with another aspect of the present invention, there is provided an apparatus for offboard navigation according to Claim 7, the apparatus comprising: a server, and a robotic device configured to move according to navigation command received from the server, the robotic device comprising sensors configured to obtain sensor data, an interface configured to receive a threshold value of a positional accuracy of the robotic device, and a processor configured to calculate latency of a network through which the robotic device and the server communicate, the latency of the network being a time
difference between sending sensor data from the robotic device to the server and receiving processed data corresponding to the sent sensor data by the robotic device from the server, and to determine the maximum allowable speed of the robotic device based on the threshold value of the positional accuracy of the robotic device and the latency of the network.

The robotic device may further comprise an odometer configured to estimate the position of the robotic device.

The server may be configured to process the sensor data sent from the.robotic device to obtain positional information of the robotic device corresponding to the sent senor data and send the positional information to the robotic device.

The processor may be further configured to set a sampling period in accordance to the latency of the network, the sampling period being a difference between two consecutive sendings of the sensor data from the robotic device to the server and to determine a commanded displacement to be moved by the robotic device in the set sampling period. The processor may be further configured to determine a desired displacement to be moved by the robotic device in the sampling period according to characteristics of odometry error of the robotic device and obtain a positional error to be offset in the sampling period to determine the commanded displacement to be moved as the desired displacement to be moved offset by the positional error.

The characteristics of the odometry error of the robotic device may be represented by a profile curve of the odometry error of the robotic device calibrated in advance.

The threshold value of the position accuracy of the robotic device may be determined based on the environment in which the robotic device operates.

The speed of the robotic device may be determined to be inversely proportional to the latency of the network.

The robotic device is driven to move at a speed equal to or less than the determined speed.

### Brief Description of the Drawings

Embodiments of the method and the apparatus will now be described with reference to the accompanying figures in which:
Fig. 1 shows an ideal situation of offboard navigation where the latency of a network is zero.
Fig. 2 shows a real situation of offboard navigation where the latency of the network exists.
Fig. 3 illustrates a positional accuracy of a robotic device.
Fig. 4 is a schematic diagram of an example of an apparatus of offboard navigation.
Fig. 5 is a flowchart illustrating an example of a method of offboard navigation.
Fig. 6 shows an example of a profile curve of an odometry error of a robotic device used in the exemplary apparatus of offboard navigation.
Fig. 7 shows a simple run-time example illustrating the method of offboard navigation.
Fig. 8 shows values of parameters at different timings according to the run-time example illustrated in Fig. 7.

### Detailed Description

Fig. 4 illustrates an exemplary apparatus 400 of offboard navigation that responds to changes in network conditions. The apparatus 400 comprises a robotic device 410 coupled to a server 430 via a communication link such as a wireless network 440. The server 430 may be any type of device capable of receiving and sending data, and may comprise powerful processors suitable for navigation processing. The server 430 may be a cloud-computing platform so that the processing load is distributed among the cloud. Navigation applications having a user interface may also be installed at the server 430 so that a user is able to configure parameters related to offboard navigation at the server 430 and monitor the entire navigation process.

As illustrated, the robotic device 410 comprises a plurality of sensors 412, a processor 414, an interface 418 and an odometer 420.

The plurality of sensors 412 may be any type of sensor capable of obtaining data surrounding the robotic device 410 or data of the environment in which the robotic device 410 operates. The sensor data obtained are then transmitted to the server 430 for navigation processing in order to derive the actual position of the robotic device 410 and/or the navigation command to be sent to the robotic device 410.

The processor 414 is used to perform processing required at the robotic device 410 such as interacting with the other components of the robotic device 410 and performing routine functions. For example, it monitors the gathering of the sensor data obtained by the plurality of sensors 412, gives instruction to send sensor data to the server 430 at appropriate timings through the wireless network 440, monitors the positional information of the robotic device 410 and/or the navigation command received and instructs the motors (not shown) of the robotic device 410 to move according to the navigation command. If the server 430 is configured to send only the positional information of the robotic device 410 to the robotic device 410, the processor 414 also performs calculation to derive the navigation command, i.e. commanded distance to be moved. It is assumed that the server 430 only send the positional information of the robotic device 410 for simplicity in the description below.

Besides the above functions, the processor 414 also determines speed of the robotic device 410 with respect to latency of the wireless network 440 to achieve a satisfactory positional accuracy of the robotic device 410.

After the robotic device 410 starts to move according to the navigation command, the odometer 420 is used to measure the distance or displacement travelled by the robotic device 410. The navigation command is considered to be completed when the distance indicated in the odometer 420 corresponds to that of the navigation command. As discussed earlier, an odometry error occurs in the process and contributes to the positional error of the robotic device 410.

The interface 418 is configured to accept a user input, for example, accepting values of operating parameters used by the robotic device 410 in the navigation that are input by the user.

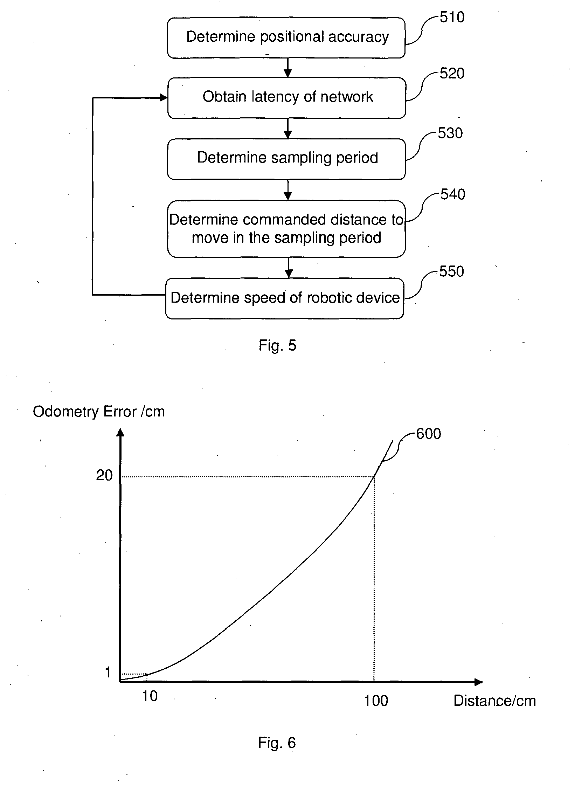

Fig. 5 shows the flowchart of the method of offboard navigation using the exemplary apparatus 400.

The positional accuracy or the maximum positional error A of the robotic device 410 is first defined based on the environment in which the robotic device 410 operates 510. For example, a maximum error of 50 cm may be allowed in an ordinary office corridor before the robotic device 410 crashes against the walls of the corridor, while a maximum error of 10 meters may be allowed in a large open plaza. When the maximum positional error allowed is defined, its value can be input into the robotic device 410 by the user as one of the operating parameters through the interface 418 of the robotic device 410 at the start of the navigation. Alternatively, its value can be loaded into the robotic device 410 through the server 430. The user may input the value at a user interface coupled to the server 430, for example, a user interface of a navigation application installed in the server or accessed by the server via wired communications. Such user interface may also be used for monitoring the performance of the offboard navigation and configuring operating parameters of the robotic device 410.

The latency of the wireless network 440 between the robotic device 410 and the server 430, L, is then obtained by the processor 414 of the robotic device 410, 520. The processor 414 obtains the time stamp at which a packet of the sensor data is sent from the robotic device 410 to the server 430 and the time stamp at which a packet of processed data corresponding to the former sensor data is received by the robotic device 410 from the server 430, and then calculates the difference between these two time stamps as the latency of the network. The latency of the network may be determined immediately before the start of the navigation by the processor 414 which causes test sensor data to be sent to the serve 430 and obtains the latency of the network when the robotic device 410 receives processed data of the test sensor data. During navigation, the latency of the network is determined dynamically. It may be defined as the period from sending the sensor data to receiving the positional information corresponding to the sensor data at the robotic device 410. Alternatively, during navigation, the robotic device 410 may be configured to send out a special packet of data independent from the sensor data, and obtain the latency of the network when receiving the response corresponding to this special packet of data from the server 430. To remove random short-term fluctuations in the network 440, a moving average of a number of successive values of the latency of the network can be used.

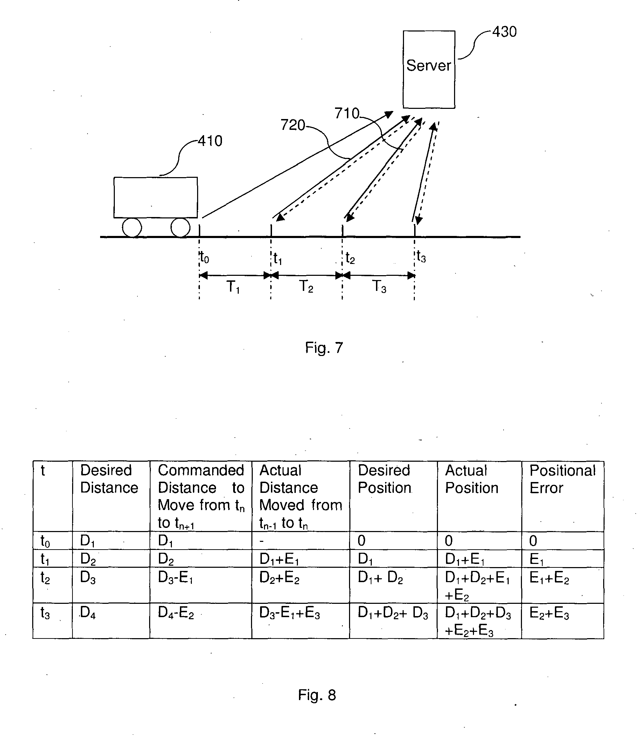

In accordance to the calculated value L of the latency of the network, a sampling period T is set by the processor 414, 530. The sampling period is defined as a period between two consecutive timings of sending the sensor data from the robotic device 410 and it may be set such that with the latest calculated value L of the latency of the network, the positional information corresponding to the movement of the robotic device 410 in the previous but one sampling period should be received by the robotic device 410 before or at the start of the movement in a particular sampling period. Fig. 7 is referred to for the illustration of the sampling period. As shown in Fig. 7, the exemplary robotic device 410 travels in a straight line. The sensor data from the robotic devices 410 are configured to be sent at successive timings to, t₁, t₂..., where Tₙ is the period between two consecutive timings tₙ₋₁ and tₙ. With a known value L of the latency of the network, T₂ is set such that the positional information corresponding to the movement of the robotic device 410 in T₁ is received by the robotic device 410 before or at the start of T₃ (represented by a dotted line arrow 710 in Fig. 7). The positional information corresponding to the movement of the robotic device 410 in T₁ is derived based on the sensor data send from the robotic device 410 at t=t₁ by the server 430 (represented by a solid line arrow 720 in Fig. 7). Therefore, the value T of the sampling period has to be greater than or equal to the latest value L of the latency of the network (T≥L). For example, the sampling period may be set to be the summation of the worst-case value of the latency of the network calculated so far and a pre-defined time buffer.

When the sampling period is set in accordance to the calculated latency of the network, at the time instance t=tₙ, the robotic device 410 receives the positional information representing its position at t=tₙ₋₁ and sends the sensor data representing its current position at t=tₙ.

As the latency of the network is constantly fluctuating during navigation due to the varying network conditions, the sampling period T may also fluctuate during navigation.

The navigation command or the commanded distance to be moved by the robotic device 410 in the set sampling period is then determined with reference to the odometry error of the robotic device 410, 540.

A profile curve of the odometry error of the robotic device 410 is used to determine the desired distance to be moved by the robotic device 410 in the sampling period. This profile curve is calibrated in advance by plotting the odometry error accumulated against the distance moved by the robotic device 410. An example of the profile curve 600 is shown in Fig. 6 where the relationship between the odometry error and the distance moved is non-linear and the odometry error is unbounded over the distance. As shown in the exemplary profile curve 600, a movement of 10 cm of the robotic device 410 causes an error of up to 1cm and a movement of 100 cm causes an error of up to 20cm.

For example, if it is decided that 20cm is the positional accuracy or maximum positional error with respect to a given environment, the positional error allowed in one sampling period T is determined to be 10 cm, which is 20 cm divided by 2 as the odometry error is propagated through two consecutive sampling periods. Based on the calibrated profile curve of the odometry error, the robotic device 410 can only move 50cm before the odometry error exceeds 10cm. Thus, the desired distance to be moved by the robotic device 410 during the sampling period T is determined as 50cm.

As discussed earlier, if the robotic device 410 makes use of its odometry information to estimate its own position while moving according to the navigation command, the odometry error which is the difference between the commanded distance to be moved and the actual distance moved by the robotic device 410 is accumulated in the sampling period. As the sampling period is set such that the sensor data corresponding to the actual position of the robotic device 410 at t=tₙ is sent to the server at t=tₙ and the actual position of the robotic device 410 at t=tₙ is sent back to the robotic device 410 before or at t=tₙ₊₁, the odometry error Eₙ₋₁ accumulated in the sampling period Tₙ₋₁ is known by the robotic device 410 at t=tₙ₊₁. To offset the odometry error Eₙ₋₁, the commanded distance to be moved determined at t=tₙ₊₁ is determined to be the desired distance to be moved corrected by the odometry error Eₙ₋₁. Thus, the odometry error Eₙ₋₁ accumulated in the sampling period Tₙ₋₁ is reset in the sampling period Tₙ₊₁, i.e. the odometry error is propagated through two consecutive sampling periods.

The speed of the robotic device 410 in the sampling period is derived as the commanded distance divided by the sampling period 550. The process from obtaining the latency of the network 520 to determining the speed of the robotic device 410, 550, continues during navigation.

The profile curve of the odometry error of the robotic device 410 is stored in a memory device (not shown) of the robotic device 410 and is accessed by the processor 414 when determining the desired distance to be moved by the robotic device 410 in the sampling period. The processor 414 determines the commanded distance to be moved based on the desired distance taking into consideration of the odometry error accumulated in the previous but one sampling period, and then calculates the speed of the robotic device 410 at the start of the sampling period.

Therefore, the maximum allowable speed S of the robotic device 410 is derived by the processor 414 in accordance to the defined threshold value A (maximum allowable value) of the positional error of the robotic device 410 and the calculated value L of the latency of the network. In order for the robotic device 410 to have a positional accuracy equal to or less than the threshold value A, the robotic device 410 is driven to travel at a speed equal to or less than the derived maximum allowable speed S.

The speed of the robotic device 410 is determined dynamically during the navigation so that a change in network condition, i.e. a change in the latency of the network will result in an adjustment of the speed of the robotic device 410.

A simple run-time example showing a first few sampling periods of the navigation is described with reference to Fig. 7 and Fig. 8. The exemplary robotic device 410 in Fig. 7 travels in a straight line. The sensor data from the robotic devices 410 are configured to be sent at successive timings t₀, t₁, t₂..., where Tₙ is the period between two consecutive timings tₙ₋₁ and tₙ. In the example, T is set to the latest calculated value of the latency of the network for simplicity in illustration.

The desired distance to be moved by the robotic device 410 in the period Tₙ is denoted as Dₙ. The actual position at the time instant t=tₙ is denoted as X(tₙ) and the starting position at the starting time t=t₀ is X(t₀)=0.

Fig. 8 shows the desired distance and the commanded distance to be moved by the robotic device 410 in the sampling cycle Tₙ, the actual distance moved in the sampling cycle Tₙ, the desired position and the actual position of the robotic device 410, and the positional error of the robotic device 410 at different timings t₀, t₁, t₂...

At t=t₀, the robotic device 410 derives the desired distance D₁ to be moved based on the sampling period set according to the latency of the network and the positional accuracy input by a user according to its operating environment. The commanded distance to be moved is the same as the desired distance D₁ as there is no positional information received.

At t=t₁, the actual distance that has been moved by the robotic device 410 is D₁+E₁, where E₁ denotes the odometry error accumulated in the sampling period T₁, i.e. from t₀ to t₁. Therefore, the actual position of the robotic device 410 at t=t₁ is X(t₁)=D₁+E₁ and the corresponding positional error is E(t₁)=E₁. The robotic device 410 sends the sensor data representing its current position to the server 430 and derives the desired distance D₂ to be moved in the sampling period T₂, i.e. from t₁ to t₂. The commanded distance to be moved is D₂ as the robotic device 410 only receives the positional information, corresponding to the sensor data sent at t=t₀, at t=t₁.

The robotic device 410 is commanded to move a distance of D₂ in the sampling period T₂ at t=t₁, but the actual distance moved is D₂+E₂. Thus, at t=t₂, the actual position of the robotic device 410 is X(t₂)=D₁+D₂+E₁+E₂ and the corresponding positional error is E(t₂)=E₁+E₂.

At t=t₂, the robotic device 410 sends the sensor data representing its current position to the server 430 and receives the positional information corresponding to the sensor data sent at t=t₁ (represented by the dotted line arrow 710), which means that the actual position of the robotic device X(t₁) at t=t₁ is considered in deriving the commanded distance to be moved from t₂ to t₃ (in the sampling period T₃). To compensate the odometry error E₁ accumulated during the sampling period T₁, the commanded distance is determined to be D₃-E₁ at t=t₂.

From t₂ to t₃, the actual distance moved is D₃-E₁+E₃. Thus, the actual position of the robotic device 410 at t=t₃ is X(t₃)= D₁+D₂+D₃+E₂+E₃, and the corresponding positional accuracy is E₂+E₃.

Therefore, at any time t, the positional error of the robotic device 410 is the odometry error of the robotic device 410 accumulated over two consecutive sampling periods which are set in accordance to the calculated L of the latency of the network. If the threshold value A of positional accuracy is known, the value E of the odometry error allowed in one sampling period can be derived. For a known E, at the start of a particular sampling period, the desired distance and the commanded distance are determined with reference to the calibrated profile curve of the odometry error of the robotic device 410 and the odometry error accumulated in the previous but one sampling period. Therefore, the speed S can be derived based on a given A and calculated L.

In reality, the robotic device is able to move in any direction, and thus the positional accuracy and the speed of the robotic device may be two dimensional vectors.

The example above illustrates the relationship among the latency of the network L, the average positional accuracy A of the robotic device, and the average speed S of the robotic device. A trade-off exists between the speed of the robotic device and its localization accuracy when navigation processing is performed offboard due to the latency of the network, In addition, the odometry error accumulates with the distance travelled, but can be reset to keep it within a certain boundary.

In slow network conditions where the value of L is high, the speed of the robotic devices can be reduced so that the accumulated odometry error is reduced, and the robotic devices will still have an acceptable positional accuracy. Conversely, in good network conditions where the value of L is low, the speed of the robotic devices can be increased as the positional updates are so frequent that the accumulated odometry error can never become significant, and the robotic devices will still have an acceptable positional accuracy. Theoretically, the robotic devices need not ever come to a complete stop even if the network speed is very slow, and still have an acceptable positional accuracy.

Although the description above focuses on achieving an acceptable positional accuracy of the robotic device, these three variables, L, A and S, can be manipulated through the above-mentioned relationship to optimize at least one of these variables. For example, the speed of the robotic device can be adjusted dynamically based on the latency of the network, given that the positional accuracy of the robotic device is fixed. Alternatively, the latency of the network L may be reduced by sending less sensor data so that the speed of the robotic devices can be increased, if the positional accuracy could be relaxed.

Whilst there has been described in the foregoing description embodiments of the present invention, it will be understood by those skilled in the technology- concerned that many variations or modifications in details of design or construction may be made without departing from the present invention.

## Claims

1. A method for offboard navigation of a robotic device (410), the method comprising:
receiving a threshold value of a positional accuracy of the robotic device (410);
calculating latency of a network (440) through which the robotic device (410) and a server (430) communicate, the latency of the network (440) being a time difference between sending sensor data from the robotic device (410) to the server (430) and receiving processed data corresponding to the sent sensor data by the robotic device (410) from the server (430);
determining speed of the robotic device (410) based on the threshold value of the positional accuracy of the robotic device (410) and the latency of the network (440); and
driving the robotic device (410) to move at a speed equal to or less than the determined speed.

2. The method according to claim 1, wherein determining the speed of the robotic device (410) comprises setting a sampling period in accordance to the latency of the network (440), the sampling period being a difference between two consecutive sendings of the sensor data from the robotic device (410) to the server (430).

3. The method according to claim 2, wherein determining the speed of the robotic device (410) further comprises determining a commanded displacement to be moved by the robotic device (410) in the sampling period.

4. The method according to claim 3, wherein determining the commanded displacement to be moved by the robotic device (410) in the sampling period comprises determining a desired displacement to be moved by the robotic device (410) in the sampling period according to characteristics of odometry error of the robotic device (410) and obtaining a positional error to be offset in the sampling period, wherein the characteristics of the odometry error of the robotic device (410) is represented by a profile curve of the odometry error of the robotic device (410) calibrated in advance.

5. The method according to any one of the preceding claims, wherein the threshold value of the positional accuracy of the robotic device (410) is determined based on the environment in which the robotic device (410) operates.

6. The method according to any one of the preceding claims, wherein the speed of the robotic device (410) is determined to be inversely proportional to the latency of the network (440).

7. An apparatus (400) for offboard navigation, the apparatus (400) comprising:
a server (430); and a robotic device (410) configured to move according to navigation command received from the server (430),
the robotic device (410) comprising sensors (412) configured to obtain sensor data;
an interface (418) configured to receive a threshold value of a positional accuracy of the robotic device (410); and
a processor (414) configured to
calculate latency of a network (440) through which the robotic device (410) and the server (430) communicate, the latency of the network (440) being a time difference between sending sensor data from the robotic device (410) to the server (430) and receiving processed data corresponding to the sent sensor data by the robotic device (410) from the server (430), and
determine speed of the robotic device (410) based on the threshold value of the positional accuracy of the robotic device (410) and the latency of the network (440), wherein the robotic device (410) is driven to move at a speed equal to or less than the determined speed.

8. The apparatus (400) according to claim 7, wherein the robotic device (410) further comprises an odometer (420) configured to estimate the position of the robotic device (410).

9. The apparatus (400) according to claim 7 or 8, wherein the server (430) is configured to process the sensor data sent from the robotic device (410) to obtain positional information of the robotic device (410) corresponding to the sent sensor data and send the positional information to the robotic device (410).

10. The apparatus (400) according to any one of claims 7 to 9, wherein the processor (414) is further configured to
set a sampling period in accordance to the latency of the network (440), the sampling period being a difference between two consecutive sendings of the sensor data from the robotic device (410) to the server (430); and
determine a commanded displacement to be moved by the robotic device (410) in the set sampling period.

11. The apparatus (400) according to claim 10, wherein the processor (414) is further configured to determine a desired displacement to be moved by the robotic device (410) in the sampling period according to characteristics of odometry error of the robotic device (410) and obtain a positional error to be offset in the sampling period to determine the commanded displacement to be moved as the desired displacement to be moved offset by the positional error, wherein the characteristics of the odometry error of the robotic device (410) is represented by a profile curve of the odometry error of the robotic device (410) calibrated in advance.

12. The apparatus (400) according to any one of claims 7 to 11, wherein the threshold value of the position accuracy of the robotic device (410) is determined based on the environment in which the robotic device (410) operates.

13. The apparatus (400) according to any one of claims 7 to 12, wherein the speed of the robotic device (410) is determined to be inversely proportional to the latency of the network (440).

## Patentansprüche

1. Verfahren zur Offboard-Navigation einer Robotervorrichtung (410), wobei das Verfahren Folgendes aufweist:
Empfangen eines Schwellenwerts einer Positionsgenauigkeit der Robotervorrichtung (410);
Berechnen der Latenz eines Netzwerks (440), durch welches die Robotervorrichtung (410) und ein Server (430) kommunizieren, wobei die Latenz des Netzwerks (440) eine Zeitdifferenz zwischen dem Senden von Sensordaten von der Robotervorrichtung (410) zum Server (430) und dem Empfangen verarbeiteter Daten, die den durch die Robotervorrichtung (410) vom Server (430) gesendeten Sensordaten entsprechen, ist;
Bestimmen der Geschwindigkeit der Robotervorrichtung (410) auf Basis des Schwellenwerts der Positionsgenauigkeit der Robotervorrichtung (410) und der Latenz des Netzwerks (440); und
Antreiben der Robotervorrichtung (410) zum Bewegen mit einer Geschwindigkeit, die so hoch wie die bestimmte Geschwindigkeit oder niedriger ist.

2. Verfahren nach Anspruch 1, wobei das Bestimmen der Geschwindigkeit der Robotervorrichtung (410) das Festsetzen einer Abtastperiode gemäß der Latenz des Netzwerks (440) aufweist, wobei die Abtastperiode eine Differenz zwischen zwei aufeinanderfolgenden Sendungen der Sensordaten von der Robotervorrichtung (410) zum Server (430) ist.

3. Verfahren nach Anspruch 2, wobei das Bestimmen der Geschwindigkeit der Robotervorrichtung (410) ferner das Bestimmen einer befohlenen Verlagerung, die von der Robotervorrichtung (410) in der Abtastperiode zurückzulegen ist.

4. Verfahren nach Anspruch 3, wobei das Bestimmen der befohlenen Verlagerung, die von der Robotervorrichtung (410) in der Abtastperiode zurückzulegen ist, das Bestimmen einer erwünschten Verlagerung, die von der Robotervorrichtung (410) in der Abtastperiode zurückzulegen ist, gemäß der Charakteristik eines Odometriefehlers der Robotervorrichtung (410) und Erhalten eines in der Abtastperiode zu kompensierenden Positionsfehlers aufweist, wobei die Charakteristik des Odometriefehlers der Robotervorrichtung (410) durch eine im Voraus kalibrierte Profilkurve des Odometriefehlers der Robotervorrichtung (410) dargestellt wird.

5. Verfahren nach einem der vorhergehenden Ansprüche, wobei der Schwellenwert der Positionsgenauigkeit der Robotervorrichtung (410) auf Basis der Umgebung, in welcher die Robotervorrichtung (410) betrieben wird, bestimmt wird.

6. Verfahren nach einem der vorhergehenden Ansprüche, wobei bestimmt wird, dass die Geschwindigkeit der Robotervorrichtung (410) umgekehrt proportional zur Latenz des Netzwerks (440) ist.

7. Vorrichtung (400) für die Offboard-Navigation, wobei die Vorrichtung (400) Folgendes aufweist:
einen Server (430); und
eine Robotervorrichtung (410), die zum Bewegen gemäß einem vom Server (430) empfangenen Navigationsbefehl konfiguriert ist,
wobei die Robotervorrichtung (410) Folgendes aufweist Sensoren (412), die zum Erhalten von Sensordaten konfiguriert sind;
eine Schnittstelle (418), die zum Empfangen eines Schwellenwerts einer Positionsgenauigkeit der Robotervorrichtung (410) konfiguriert ist; und
einen Prozessor (414), der konfiguriert ist zum
Berechnen der Latenz eines Netzwerks (440), durch welches die Robotervorrichtung (410) und der Server (430) kommunizieren, wobei die Latenz des Netzwerks (440) eine Zeitdifferenz zwischen dem Senden von Sensordaten von der Robotervorrichtung (410) zum Server (430) und dem Empfangen verarbeiteter Daten, die den durch die Robotervorrichtung (410) vom Server (430) gesendeten Sensordaten entsprechen, und
Bestimmen der Geschwindigkeit der Robotervorrichtung (410) auf Basis des Schwellenwerts der Positionsgenauigkeit der Robotervorrichtung (410) und der Latenz des Netzwerks (440), wobei die Robotervorrichtung (410) zum Bewegen mit einer Geschwindigkeit angetrieben wird, die kleiner oder gleich der bestimmten Geschwindigkeit ist, angetrieben wird.

8. Vorrichtung (400) nach Anspruch 7, wobei die Robotervorrichtung (410) ferner ein Odometer (420) aufweist, das zum Schätzen der Position der Robotervorrichtung (410) konfiguriert ist.

9. Vorrichtung (400) nach Anspruch 7 oder 8, wobei der Server (430) konfiguriert ist zum Verarbeiten der von der Robotervorrichtung (410) gesendeten Sensordaten zum Erhalten von Positionsinformationen der Robotervorrichtung (410), die den gesendeten Sensordaten entsprechen, und Senden der Positionsinformationen an die Robotervorrichtung (410).

10. Vorrichtung (400) nach einem der Ansprüche 7 bis 9, wobei der Prozessor (414) ferner konfiguriert ist zum
Festsetzen einer Abtastperiode gemäß der Latenz des Netzwerks (440), wobei die Abtastperiode eine Differenz zwischen zwei aufeinanderfolgenden Sendungen der Sensordaten von der Robotervorrichtung (410) zum Server (430) ist; und
Bestimmen einer befohlenen Verlagerung, die von der Robotervorrichtung (410) in der festgesetzten Abtastperiode zurückzulegen ist.

11. Vorrichtung (400) nach Anspruch 10, wobei der Prozessor (414) ferner konfiguriert ist zum Bestimmen einer erwünschten Verlagerung, die von der Robotervorrichtung (410) in der Abtastperiode zurückzulegen ist, gemäß der Charakteristik eines Odometriefehlers der Robotervorrichtung (410) und Erhalten eines in der Abtastperiode zu kompensierenden Positionsfehlers, um die befohlene Verlagerung, die zurückzulegen ist, als die um den Positionsfehler kompensierte erwünschte Verlagerung, die zurückzulegen ist, zu bestimmen, wobei die Charakteristik des Odometriefehlers der Robotervorrichtung (410) durch eine im Voraus kalibrierte Profilkurve des Odometriefehlers der Robotervorrichtung (410) dargestellt wird.

12. Vorrichtung (400) nach einem der Ansprüche 7 bis 11, wobei der Schwellenwert der Positionsgenauigkeit der Robotervorrichtung (410) auf Basis der Umgebung, in welcher die Robotervorrichtung (410) betrieben wird, bestimmt wird.

13. Vorrichtung (400) nach einem der Ansprüche 7 bis 12, wobei bestimmt wird, dass die Geschwindigkeit der Robotervorrichtung (410) umgekehrt proportional zur Latenz des Netzwerks (440) ist.

## Revendications

1. Procédé de navigation non embarquée d'un dispositif robotique (410), le procédé comportant les étapes consistant à :
recevoir une valeur de seuil d'une précision de position du dispositif robotique (410) ;
calculer la latence d'un réseau (440) par l'intermédiaire duquel le dispositif robotique (410) et un serveur (430) communiquent, la latence du réseau (440) étant une différence de temps entre l'envoi de données de capteurs en provenance du dispositif robotique (410) au serveur (430) et la réception de données traitées correspondant aux données de capteurs ayant été envoyées par le dispositif robotique (410) en provenance du serveur (430) ;
déterminer la vitesse du dispositif robotique (410) en fonction de la valeur de seuil de la précision de position du dispositif robotique (410) et la latence du réseau (440) ; et
entraîner le dispositif robotique (410) à se déplacer à une vitesse égale ou inférieure à la vitesse déterminée.

2. Procédé selon la revendication 1, dans lequel l'étape consistant à déterminer la vitesse du dispositif robotique (410) comporte l'étape consistant à établir une période d'échantillonnage en fonction de la latence du réseau (440), la période d'échantillonnage étant une différence entre deux envois consécutifs des données de capteurs en provenance du dispositif robotique (410) au serveur (430).

3. Procédé selon la revendication 2, dans lequel l'étape consistant à déterminer la vitesse du dispositif robotique (410) comporte par ailleurs l'étape consistant à déterminer un déplacement commandé destiné à être parcouru par le dispositif robotique (410) au cours de la période d'échantillonnage.

4. Procédé selon la revendication 3, dans lequel l'étape consistant à déterminer le déplacement commandé destiné à être parcouru par le dispositif robotique (410) au cours de la période d'échantillonnage comporte l'étape consistant à déterminer un déplacement souhaité destiné à être parcouru par le dispositif robotique (410) au cours de la période d'échantillonnage en fonction de caractéristiques d'erreur d'odométrie du dispositif robotique (410) et l'étape consistant à obtenir une erreur de position à des fins de compensation au cours de la période d'échantillonnage, dans lequel la caractéristique de l'erreur d'odométrie du dispositif robotique (410) est représentée par une courbe de profil de l'erreur d'odométrie du dispositif robotique (410) calibrée à l'avance.

5. Procédé selon l'une quelconque des revendications précédentes, dans lequel la valeur de seuil de la précision de position du dispositif robotique (410) est déterminée en fonction de l'environnement dans lequel le dispositif robotique (410) fonctionne.

6. Procédé selon l'une quelconque des revendications précédentes, dans lequel la vitesse du dispositif robotique (410) est déterminée comme étant inversement proportionnelle à la latence du réseau (440).

7. Appareil (400) de navigation non embarquée, l'appareil (400) comportant :
un serveur (430) ; et
un dispositif robotique (410) configuré pour se déplacer en fonction d'une commande de navigation reçue en provenance du serveur (430),
le dispositif robotique (410) comportant
des capteurs (412) configurés pour obtenir des données de capteurs ;
une interface (418) configurée pour recevoir une valeur de seuil d'une précision de position du dispositif robotique (410) ; et
un processeur (414) configuré pour
calculer la latence d'un réseau (440) par l'intermédiaire duquel le dispositif robotique (410) et le serveur (430) communiquent, la latence du réseau (440) étant une différence de temps entre l'envoi de données de capteurs en provenance du dispositif robotique (410) au serveur (430) et la réception de données traitées correspondant aux données de capteurs ayant été envoyées par le dispositif robotique (410) en provenance du serveur (430), et
déterminer la vitesse du dispositif robotique (410) en fonction de la valeur de seuil de la précision de position du dispositif robotique (410) et la latence du réseau (440), dans lequel le dispositif robotique (410) est entraîné pour se déplacer à une vitesse égale ou inférieure à la vitesse déterminée.

8. Appareil (400) selon la revendication 7, dans lequel le dispositif robotique (410) comporte par ailleurs un odomètre (420) configuré pour estimer la position du dispositif robotique (410).

9. Appareil (400) selon la revendication 7 ou la revendication 8, dans lequel le serveur (430) est configuré pour traiter les données de capteurs envoyées en provenance du dispositif robotique (410) pour obtenir des informations de position du dispositif robotique (410) correspondant aux données de capteurs envoyées et pour envoyer les informations de position au dispositif robotique (410).

10. Appareil (400) selon l'une quelconque des revendications 7 à 9, dans lequel le processeur (414) est par ailleurs configuré pour
établir une période d'échantillonnage en fonction de la latence du réseau (440), la période d'échantillonnage étant une différence entre deux envois consécutifs des données de capteurs en provenance du dispositif robotique (410) au serveur (430) ; et
l'étape consistant à déterminer un déplacement commandé destiné à être parcouru par le dispositif robotique (410) au cours de la période d'échantillonnage établie.

11. Appareil (400) selon la revendication 10, dans lequel le processeur (414) est par ailleurs configuré pour déterminer un déplacement souhaité destiné à être parcouru par le dispositif robotique (410) au cours de la période d'échantillonnage en fonction de caractéristiques d'erreur d'odométrie du dispositif robotique (410) et pour obtenir une erreur de position à des fins de compensation au cours de la période d'échantillonnage pour déterminer le déplacement commandé destiné à être parcouru comme étant le déplacement souhaité destiné à être parcouru compensé par l'erreur de position, dans lequel la caractéristique de l'erreur d'odométrie du dispositif robotique (410) est représentée par une courbe de profil de l'erreur d'odométrie du dispositif robotique (410) calibré à l'avance.

12. Appareil (400) selon l'une quelconque des revendications 7 à 11, dans lequel la valeur de seuil de la précision de position du dispositif robotique (410) est déterminée en fonction de l'environnement dans lequel le dispositif robotique (410) fonctionne.

13. Appareil (400) selon l'une quelconque des revendications 7 à 12, dans lequel la vitesse du dispositif robotique (410) est déterminée comme étant inversement proportionnelle à la latence du réseau (440).
